# EUROPÄISCHE PATENTANMELDUNG

(11) **EP 0 627 353 A2**
(43) Veröffentlichungstag der Anmeldung: **07.12.1994**
(21) Anmeldenummer: 94107660.6
(22) Anmeldetag: 18.05.1994
(51) Int. Cl.: B62D 6/00

(54) **Abschaltbare Servolenkung**

(30) Priorität: 03.06.1993 DE 4318933
(71) Anmelder: LuK Fahrzeug-Hydraulik GmbH & Co. KG, D-61352 Bad Homburg (DE)
(72) Erfinder: Denfeld, Bernd, D-61381 Friedrichsdorf (DE); Lauth, Hans-Jürgen, D-61250 Usingen (DE); Nied-Menninger, Thomas, D-61250 Usingen (DE); Overdiek, Gerhard, D-61381 Friedrichsdorf (DE)
(74) Vertreter: Gleiss, Alf-Olav, Dr.jur. Dipl.-Ing.

(57) **Zusammenfassung**

Die Erfindung betrifft eine abschaltbare Servolenkung mit einer über eine Antriebsmaschine eines Kraftfahrzeugs antreibbaren Lenkhilfpumpe, die in einfacher Weise beim Auftreten niedriger Radkräfte von ihrem Antrieb getrennt werden kann.

Dazu ist vorgesehen, daß die Lenkhilfpumpe (20) eine hydraulische Kupplung (18) aufweist, die über einen Ölkreislauf, vorzugsweise einen Schmierölkreislauf (14), der Antriebsmaschine (10) betätigbar ist.

## Beschreibung

Die Erfindung betrifft eine abschaltbare Servolenkung mit einer über die Antriebsmaschine eines Kraftfahrzeugs antreibbaren Lenkhilfpumpe.

Es ist bekannt, in Kraftfahrzeugen zur Lenkunterstützung sogenannte Servolenkungen einzubauen, die über eine Lenkhilfpumpe verfügen, die den notwendigen für die Lenkunterstützung benötigten Ölfluß beziehungsweise -druck zur Verfügung stellt. Diese Lenkhilfpumpen sind in der Regel über ein Antriebsmittel, beispielsweise einen Keilriemen, mit der Antriebsmaschine des Kraftfahrzeugs verbunden, so daß die Lenkhilfpumpe immer dann, wenn auch die Antriebsmaschine des Kraftfahrzeugs läuft, angetrieben wird. Hierbei ist nachteilig, daß die Lenkhilfpumpe immer auch dann mitläuft, wenn von einem an der Lenkhilfpumpe angeschlossenen Verbraucher, das heißt, der Lenkung, keine Unterstützung benötigt wird. Dies ist beispielsweise bei einer schnellen Autobahnfahrt ohne Lenkbewegungen der Fall. Da hier die Lenkhilfpumpe, wo sie eigentlich nicht benötigt wird, im Leerlauf mitläuft, verbraucht sie eine Verlustenergie von ca. 0,3 bis 2 KW bei 2000 bis 6000 U/min, mit der die Antriebsmaschine des Kraftfahrzeugs belastet wird. Dies führt zu einem Mehrverbrauch an Kraftstoff.
maschine des Kraftfahrzeugs belastet wird. Dies führt zu einem Mehrverbrauch an Kraftstoff.

Weiterhin ist bereits vorgeschlagen worden, die Lenkhilfpumpe nicht über die Antriebsmaschine des Kraftfahrzeugs, sondern über einen separaten Elektromotor anzutreiben. Hierbei ist jedoch nachteilig, daß für den Antrieb der Lenkhilfpumpe ein zusätzlicher, relativ großer und schwerer Elektromotor vorgesehen sein muß, der im Betrieb zu zusätzlichen Wirkungsgradverlusten führt.

Weiterhin ist bekannt, den Lenkhilfpumpen Elektrokupplungen zuzuordnen, mit denen die Lenkhilfpumpen während der Zeit, in der sie nicht benötigt werden, ausgekuppelt werden können. Hierbei ist jedoch nachteilig, daß für die Elektrokupplungen eine zusätzliche Stromversorgung notwendig ist und die die Elektrokupplung betätigenden Elektromagnete einen relativ großen Einbauraum benötigen.

Der Erfindung liegt daher die Aufgabe zugrunde, eine abschaltbare Servolenkung der gattungsgemäßen Art zu schaffen, bei der in einfacher Weise eine sichere vorübergehende Abschaltung der Lenkhilfpumpe möglich ist und diese keinen zusätzlichen Antrieb benötigt.

Erfindungsgemäß wird diese Aufgabe durch die im Kennzeichen des Anspruchs 1 genannten Merkmale gelöst.

Dadurch, daß die Lenkhilfpumpe eine hydraulische Kupplung aufweist, die über einen Ölkreislauf, vorzugsweise einen Schmierölkreislauf der Antriebsmaschine betätigbar ist, kann in vorteilhafter Weise ein sowieso vorhandener Schmierölkreislauf für die Antriebsmaschine dazu ausgenutzt werden, eine hydraulische Kupplung zu betätigen, so daß keine zusätzlichen Antriebe für die Lenkhilfpumpe notwendig sind und diese trotzdem außer Betrieb gesetzt werden kann.

In bevorzugter Ausgestaltung der Erfindung ist vorgesehen, daß ein zu der Kupplung führender Zweig des Schmierölkreislaufs ein Magnetventil enthält, das über eine mit der Lenkung des Kraftfahrzeugs zusammenwirkende Steuerschaltung betätigbar ist. Die Steuerschaltung wird vorzugsweise durch einen Sensor, insbesondere einen Drehmomentensensor aktiviert, der auf eine Veränderung (Betätigung) der Lenkung des Kraftfahrzeugs reagiert. Der Sensor kann dabei an jeder geeigneten Stelle im Bereich des gesamten Lenksystems des Kraftfahrzeugs angeordnet sein. Der Drehmomentsensor ist in bevorzugter Ausgestaltung der Erfindung einem Lenkrad des Kraftfahrzeugs zugeordnet, wobei dieser bei Überschreiten eines bestimmten Drehmoments am Lenkrad die Steuerschaltung aktiviert. Hierdurch wird sehr vorteilhaft erreicht, daß bei niederen Radkräften, die beispielsweise bei Geradeausfahrten auf Autobahnen auftreten, wenn das per Hand aufzubringende Drehmoment am Lenkrad kleiner gleich 3 N/m ist, über den Drehmomentsensor im Lenkrad die Steuerschaltung so aktiviert wird, daß das Magnetventil öffnet und damit der Öldruck des Schmierölkreislaufs auf die hydraulische Kupplung wirkt und diese damit die Lenkhilfpumpe auskuppelt.

Für den Fall, daß das benötigte per Hand aufzubringende Drehmoment am Lenkrad größer als etwa 3 N/m wird, beispielsweise bei einer Kurvenfahrt oder einem platzenden Reifen, wird durch den im Lenkrad angeordneten Drehmomentsensor die Steuerschaltung so aktiviert, daß diese das Magnetventil schließt und gleichzeitig den zu der hydraulischen Kupplung führenden Zweig des Schmierölkreislaufs entlüftet, so daß die hydraulische Kupplung die Lenkhilfpumpe sofort wieder einkuppelt und die hydraulische Lenkunterstützung damit wirksam ist.

In weiterer bevorzugter Ausgestaltung der Erfindung ist vorgesehen, daß die Kupplung wenigstens einen Hydraulikzylinder aufweist, der über den Zweig des Schmierölkreislaufs mit einem Druck beaufschlagbar ist und vorzugsweise zur Beaufschlagung des Hydraulikzylinders ein von einer Mindestdrehzahl der Antriebsmaschine abhängiger Druck notwendig ist. Hiermit wird erreicht, daß erst ein Hochfahren der Antriebsmaschine und damit einer mit der Antriebsmaschine zusammenwirkenden Schmierölpumpe, die den Schmierölkreislauf aufbaut, notwendig ist, bevor die hydraulische Kupplung überhaupt betätigbar ist. Hierbei ist sehr vorteilhaft, daß die Schmierölpumpe erst dann mit dem zusätzlichen Druck für die Betätigung der hydraulischen Kupplung belastet wird, wenn sie einen sicher wirkenden Schmierölkreislauf zur Motorschmierung aufgebaut hat. Diese Mindestdrehzahl kann nunmehr so gewählt werden, daß beispielsweise eine Auskupplung der Lenkhilfpumpe ausschließlich nur bei sehr schnellen Autobahnfahrten, wo die Drehzahl beispielsweise über 4000 U/min. liegt, erfolgt. Diese Mindestdrehzahl kann jedoch auch niedriger gelegt werden, so daß die Lenkhilfpumpe auch bei einer untertourigen Fahrweise, bei der die Lenkung nicht benötigt wird, ausgekuppelt werden kann.

In weiterer bevorzugter Ausgestaltung der Erfindung ist vorgesehen, daß die Kupplung ein über den Hydraulikzylinder gegen die Kraft einer Feder betätigbares erstes Kupplungsteil aufweist, das mit einem zweiten ständig rotierenden Kuplungsteil in oder außer Eingriff bringbar ist. Hiermit wird sehr vorteilhaft erreicht, daß die hydraulische Kupplung bei Nichtbetätigung des ersten Kupplungsteils über den Hydraulikzylinder sich ständig im eingekuppelten Zustand befindet, und somit die Lenkhilfpumpe in Betrieb ist. Somit kann sofort, wenn der Hydraulikzylinder nicht mehr mit einem Druck aus dem Schmierölkreislauf beaufschlagt wird, ein selbsttätiges Einkuppeln der Lenkhilfpumpe erfolgen. Durch dieses sofortige Einkuppeln wird die Sicherheit, beispielsweise im Havariefall, dahingehend erhöht, daß die Lenkhilfpumpe immer dann, wenn sie benötigt wird, auch sofort zur Verfügung steht.

Weitere vorteilhafte Ausgestaltungen der Erfindung ergeben sich aus den übrigen in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch eine Gesamtübersicht einer abschaltbaren Servolenkung;
- Figur 2: einen Längsschnitt durch eine Lenkhilfpumpe mit einer hydraulischen Kupplung in einer ersten Ausführung;
- Figur 3: eine Lenkhilfpumpe mit einer hydraulischen Kupplung in einer zweiten Ausführung und
- Figur 4: einen Längsschnitt durch eine Lenkhilfpumpe mit einer hydraulischen Kupplung in einer dritten Ausführung.

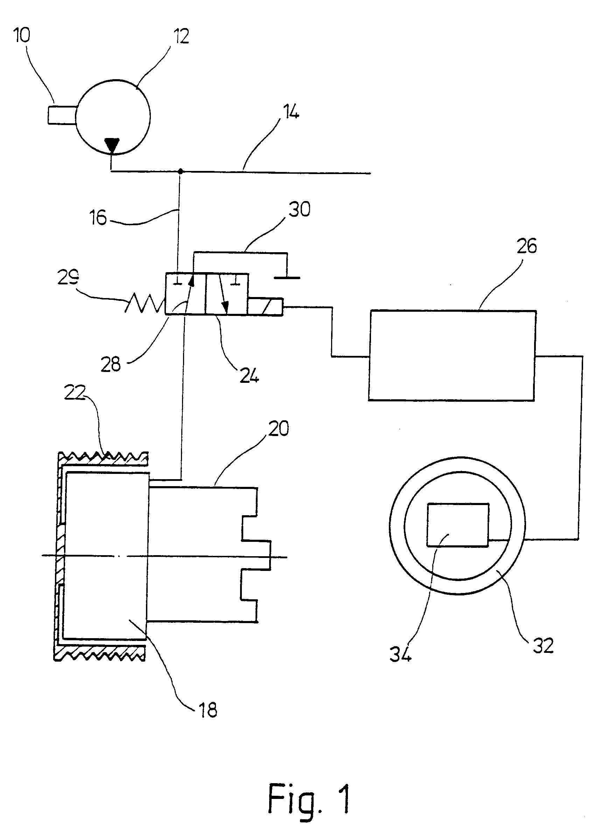

In der Figur 1 ist eine beispielsweise als Brennkraftmaschine ausgebildete Antriebsmaschine 10 eines nicht dargestellten Kraftfahrzeugs gezeigt, die unter anderem eine Schmierölpumpe 12 antreibt. Von der Schmierölpumpe 12 geht ein Schmierölkreislauf 14 aus, der die hier nicht näher zu betrachtende Schmierung der Antriebsmaschine 10 übernimmt. Von dem Schmierölkreislauf 14 führt ein Zweig 16 zu einer mit einer hydraulischen Kupplung 18 versehenen Lenkhilfpumpe 20. Die Lenkhilfpumpe 20 bzw. die Kupplung 18 ist hier über eine Riemenscheibe 22 angetrieben, die über einen nicht dargestellten Riemen mit der Antriebsmaschine 10 verbunden ist. In dem Zweig 16 ist ein Magnetventil 24 angeordnet, das über eine Steuerschaltung 26 betätigbar ist. Das Magnetventil 24 weist ein Schaltelement 28 auf, das einerseits die Kupplung 18 mit dem Zweig 16 verbinden kann und das bei diesem Ausführungsbeispiel andererseits die Kupplung 18 mit einer zu einem hier nicht dargestellten Tank führenden Verbindung 30 verbinden kann. Das Schaltelement 28 ist hierbei gegen die Kraft einer Feder 29 schaltbar. Die Steuerschaltung 26 ist mit einem Sensor, beispielsweise einem Drehmomentsensor 34, in einem Lenkrad 32 des Kraftfahrzeugs verbunden.

Die in Figur 1 gezeigte Anordnung übt folgende Funktion aus:
Nach Starten der Antriebsmaschine 10 des Kraftfahrzeugs wird über die Schmierölpumpe 12 im Schmierölkreislauf 14 ein Druck aufgebaut, der über den Zweig 16 auch an dem Magnetventil 24 anliegt. Über die Antriebsmaschine 10 wird gleichzeitig die Riemenscheibe 22 und über die sich im eingekuppelten Zustand befindende Kupplung 18 die Lenkhilfpumpe 20 angetrieben. Die Lenkhilfpumpe 20 versorgt dabei einen hier nicht dargestellten Verbraucher, insbesondere die Lenkung, mit einem Ölfluß beziehungsweise Öldruck. Im Ausgangszustand befindet sich die Kupplung 18 im eingekuppelten Zustand und wird über das Schaltelement 28 und die Verbindung 30 zu einem Tank hin hydraulisch entlastet. Wenn nun bei höheren Drehzahlen der Antriebsmaschine 10, beispielsweise bei einer Autobahnfahrt, niedrige Radkräfte an den Rädern des Kraftfahrzeugs auftreten, tritt am Lenkrad 32 ein niedriges Handmoment auf. Dieses Handmoment wird über den Drehmomentsensor 34 erfaßt und an die Steuerschaltung 26 weitergemeldet. Der dem Lenkrad 32 zugeordnete Drehmomentsensor 34 ist lediglich beispielhaft. Die Detektierung der in der Lenkung des Kraftfahrzeugs auftretenden Kräfte kann durch jeden anderen Sensor erfolgen, der an geeigneter Position in dem gesamten Lenksystems des Kraftfahrzeugs angeordnet sein kann.

Liegt nun das Handmoment unter einem vorgegebenen Wert, beispielsweise von kleiner gleich 3 N/m, wird über die Steuerschaltung 26 das Magnetventil 24 betätigt, so daß das Schaltelement 28 eine Verbindung zwischen dem Zweig 16 und der Kupplung 18 herstellt. Bei Drehzahlen der Schmierölpumpe 12 ab ca. 1000 U/min. ist der Öldruck in dem Schmierölkreislauf 14 und dem Zweig 16 so groß, daß die Kupplung 18 ohne weiteres betätigt werden kann. Durch Beaufschlagen der Kupplung 18 mit dem von der Schmierölpumpe 12 ausgehenden Druck wird diese entkuppelt und damit die Lenkhilfpumpe 20 von der Riemenscheibe 22 getrennt. Hiermit wird erreicht, daß die Lenkhilfpumpe 20 in einer Betriebsphase, in der sie für die Lenkung nicht benötigt wird, vom Antrieb getrennt ist und damit ihre Verlustenergie, die abhängig von der Drehzahl bei 0,3 bis 2 kW liegt, nicht die Antriebsmaschine 10 belastet. Somit kann beispielsweise Kraftstoff zum Betrieb der Antriebsmaschine 10 eingespart werden.

Wird nunmehr das Handmoment am Lenkrad 32 größer als der voreingestellte Wert, beispielsweise durch eine Kurvenfahrt oder einen Reifenplatzer, die eine Erhöhung der Radkräfte der Räder des Kraftfahrzeugs bewirken, so gibt der Drehmomentsensor 34 ein entsprechendes Signal an die Steuerschaltung 26. Die Steuerschaltung 26 betätigt sofort das Magnetventil 24, so daß das Schaltelement 28 durch die Kraft der Feder 29 eine Verbindung zwischen der Kupplung 18 und der zum Tank führenden Verbindung 30 herstellt und die Kupplung hydraulisch entlastet wird. Gleichzeitig wird unter Federkraft die Kupplung 18 eingekuppelt, so daß die Lenkhilfpumpe 20 wieder mit ihrem Antrieb verbunden ist und den angeschlossenen Verbraucher zur Lenkunterstützung mit einem Ölstrom versorgen kann. Durch diese Anordnung wird erreicht, daß bei niedrigen Lenkkräften eine Energieersparnis zu verzeichnen ist, und trotzdem im Bedarfsfall sofort eine hohe Kraftdichte und Lenkdynamik der hydraulischen Servolenkung zur Verfügung steht.

Die Anordnung der Feder 29 stellt gleichzeitig eine Ausfallsicherung, einen sogenannten "fail safe" dar, indem bei einem Ausfall der Steuerschaltung 26 durch die Kraft der Feder 29 eine Verbindung zwischen der Kupplung 18 und der Verbindung 30 hergestellt und damit die Kupplung 18 entlastet und somit, wie bereits erwähnt, eingekuppelt wird. Eine weitere Ausfallsicherung ist dadurch erreicht, indem die Kupplung 18 nur gegen die Kraft einer in Figur 1 nicht dargestellten Feder entkuppelt werden kann. Sinkt der von der Schmierölpumpe 12 ausgehende Druck, beispielsweise durch eine Havariesituation, unter einen bestimmten Wert, wird durch die Feder die Kupplung 18 eingekuppelt. Somit ist in jedem Fall gewährleistet, daß eine von der Lenkhilfpumpe 20 ausgehende Lenkunterstützung sofort zur Verfügung steht.

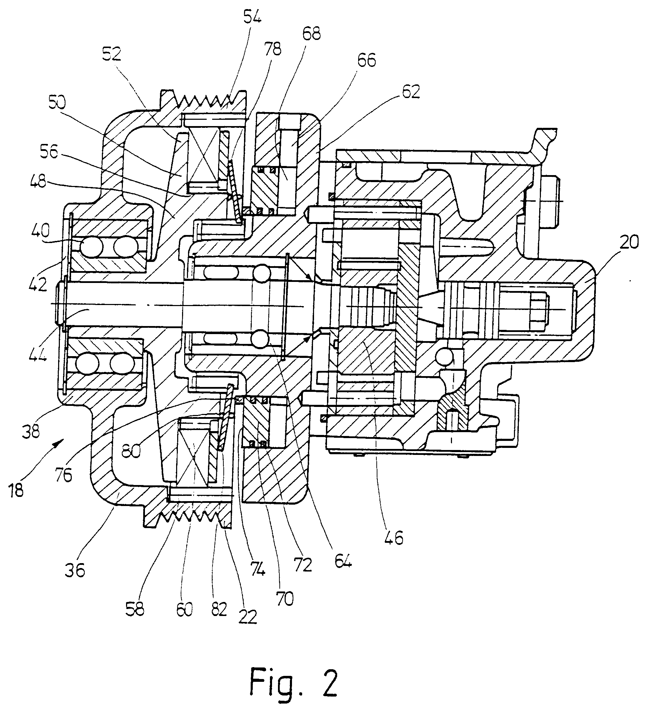

In der Figur 2 ist der Aufbau der Kupplung 18 in einer Schnittdarstellung verdeutlicht. In der Figur 2 ist die Lenkhilfpumpe 20 mit der angeflanschten Kupplung 18 gezeigt. Die Kupplung 18 besitzt ein mit der Riemenscheibe 22 verbundenes Teil 36, das in einer Erweiterung 38 ein Lager 40 aufnimmt. Das Lager 40 ist in einer Lagerschale 42 gegengelagert, die gleichzeitig eine Welle 44 aufnimmt. Die Welle 44 weist an ihrem einen Ende einen Rotor 46 der Lenkhilfpumpe 20 auf. Mit der Welle 44 ist ein rotationssymmetrisches Teil 48 fest verbunden, das in seinem Außenumfang in einen U-förmigen Bereich 50 ausläuft. Der Bereich 50 besitzt einen festen Schenkel 52 und einen in axialer Richtung bewegbaren Schenkel 54. An einem durch die Schenkel 52 und 54 gebildeten Grund 56 sind in radialer Richtung verlaufende, hier nicht dargestellte, zueinander beabstandete Lamellen angeordnet. Dem U-förmigen Bereich 50 gegenüberliegend ist an dem Teil 36 ein Zwischenstück 58 fest angeordnet, das derart beanstandete radial verlaufende Lamellen besitzt, daß diese Lamellen sich mit den an den Grund 56 angeordneten Lamellen in einem Bereich 60 abwechselnd überlappen. Die Kupplung 18 besitzt weiterhin ein feststehendes Teil 62, das mit der Lenkhilfpumpe 20 verbunden ist und durch das die Welle 44 in einem Lager 64 geführt ist. Das Teil 62 weist einen mit dem in Figur 1 beschriebenen Zweig 18 über das Magnetventil 24 verbindbaren Kanal 66 auf, der in einem Ringraum 68 mündet. In dem Ringraum 68 ist ein Hydraulikzylinder (Zylinderkolben) 70 angeordnet, der über Dichtungen 72 gegen das Teil 62 abgedichtet ist. Der Hydraulikzylinder 70 weist an seiner der Lenkhilfpumpe 20 abgewandten Seite 74 einen nasenartigen Vorsprung 76 auf, der gegen eine Tellerfeder 78 gerichtet ist. Die Tellerfeder 78 ist in einer Führung 80 gelagert und drückt mit ihrem Ende 82 gegen den Schenkel 54. Auf weitere Einzelheiten des mechanischen Aufbaus der Kupplung 18 und der Lenkhilfpumpe 20 soll hier nicht weiter eingegangen werden.

Die in Figur 2 gezeigte Anordnung übt folgende Funktion aus:
Über eine nicht dargestellte Antriebsmaschine wird die Riemenscheibe 22 und damit das Teil 36 in Rotation versetzt. Gleichzeitig mit dem Teil 36 rotieren die in dem Bereich 60 mit dem Zwischenstück 58 verbundenen Lamellen. Durch die Kraft der Tellerfeder 78 wird der Schenkel 54 in Richtung des Schenkels 52 gepreßt, so daß die an dem Grund 56 angeordneten Lamellen in ihrem Überlappungsbereich mit den an dem Zwischenstück 58 angeordneten Lamellen zussmmengepreßt werden. Hierdurch erfolgt eine Kraftübertragung, so daß das Teil 48 und damit die Welle 44 entsprechend der Drehzahl des Teils 36 mitrotieren. Mit Rotation der Welle 44 wird der Rotor 46 der Lenkhilfpumpe 20 in Rotation versetzt und fördert einen Ölstrom in einer hier nicht näher zu betrachtenden Weise zu einem angeschlossenen Verbraucher, insbesondere eine Lenkung. Treten nun, wie bereits in Figur 1 beschrieben, geringe Radkräfte auf, so wird der Hydraulikzylinder 70 über den Kanal 66 und den Ringraum 68 mit einem von dem Schmierölkreislauf 14 ausgehenden Druck beaufschlagt. Infolge des Druckes wird der Hydraulikzylinder 70 in axialer Richtung entgegen der Lenkhilfpumpe 20 bewegt und drückt mit seinem Vorsprung 76 auf die Tellerfeder 78. Hierdurch schwenkt die Tellerfeder 78 um ihre Führung 80 und gelangt damit außer Eingriff mit dem Schenkel 54. Da der Schenkel 54 eine Vorspannung aufweist, wird durch den Wegfall der von der Tellerfeder 78 ausgehenden Kraft der Preßdruck auf die in dem Bereich 60 überlappend angeordneten Lamellen aufgehoben, so daß zwischen diesen keine Kraftübertragung mehr stattfindet. Infolgedessen rotiert das über die Riemenscheibe 22 angetriebene Teil 36 weiter, während das Teil 48 und damit der Rotor 46 zum Stillstand kommen. Somit ist die Lenkhilfpumpe 20 außer Betrieb und verbraucht nicht ihre Verlustenergie. Treten nunmehr höhere Radkräfte auf, wird, wie bereits zu Figur 1 erwähnt, der Kanal 66 über die Verbindung 30 entlüftet, so daß der Hydraulikzylinder 70 über die Tellerfeder 78 in seine Ausgangsstellung zurückgedrängt wird. Gleichzeitig drückt die Tellerfeder 78 wieder gegen den Schenkel 54, so daß das Teil 48 mit dem Teil 36 in der bereits beschriebenen Weise kraftschlüssig gekuppelt wird.

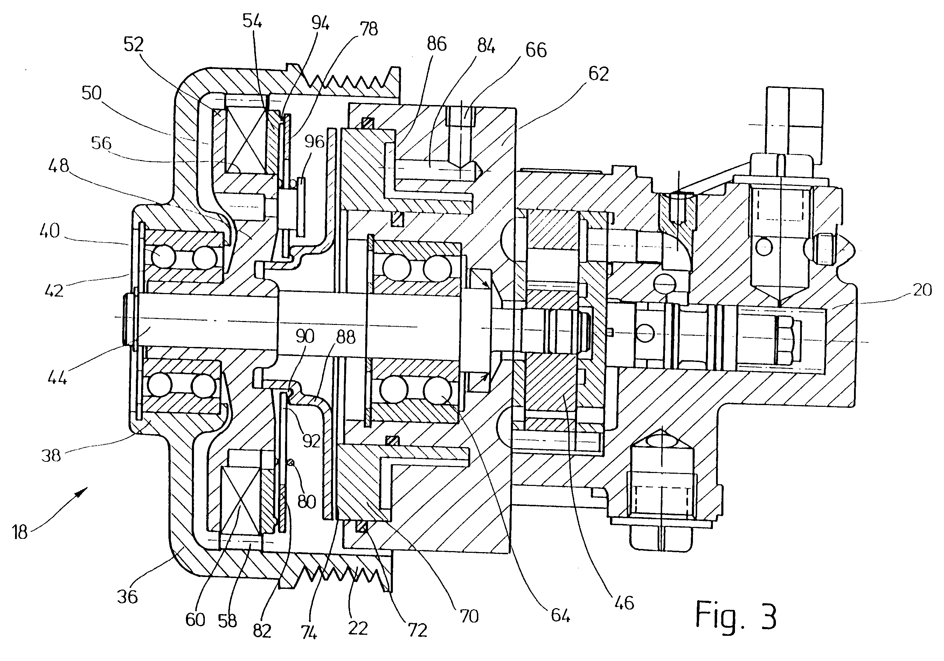

In der Figur 3 ist eine weitere Variante einer Kupplung 18 gezeigt, wobei gleiche Teile wie in Figur 2 mit gleichen Bezugszeichen versehen sind und hier nicht nochmals erläutert sind. Der Kanal 66 mündet hier in eine axiale Bohrung 84, die eine Verbindung zwischen dem Kanal 66 und einem L-förmigen Ringraum 86 herstellt. In dem Ringraum 86 ist hier der Hydraulikzylinder 70 angeordnet. Dem Hydraulikzylinder 70 zugeordnet ist ein scheibenförmiger Körper 88, der eine in radialer Richtung weisende Nase 90 besitzt, die an einem Ende 92 der Tellerfeder 78 anliegt. Der Schenkel 54 des U-förmigen Bereichs 50 weist einen nasenförmigen Vorsprung 94 auf, an dem die Tellerfeder 78 mit ihrem Ende 82 anliegt. Der Tellerfeder 78 ist weiterhin ein Halteniet 96 zugeordnet, mit dem die Tellerfeder 78 an der Kupplung befestigt ist.

Die Wirkungsweise der hier gezeigten Anordnung ist die gleiche wie die bereits zu Figur 1 beschriebene. Indem der Kanal 66 und damit die Bohrung 84 und der Ringraum 86 mit einem Druck beaufschlagt werden, wird der Hydraulikzylinder 70 gegen den Körper 88 geschoben. Dieser drückt daraufhin mit seiner Nase 90 die Tellerfeder 78 an ihrem Ende 92 in Richtung des Teils 48, so daß das Ende 82 der Tellerfeder 78 um die Führung 80 in Richtung des Hydraulikzylinders 70 verschwenkt. Damit wird keine Federkraft mehr auf den Schenkel 54 und die in dem Bereich 60 bereits zu Figur 1 beschriebenen Lamellen ausgeübt, so daß die Kupplung 18 auskuppelt.

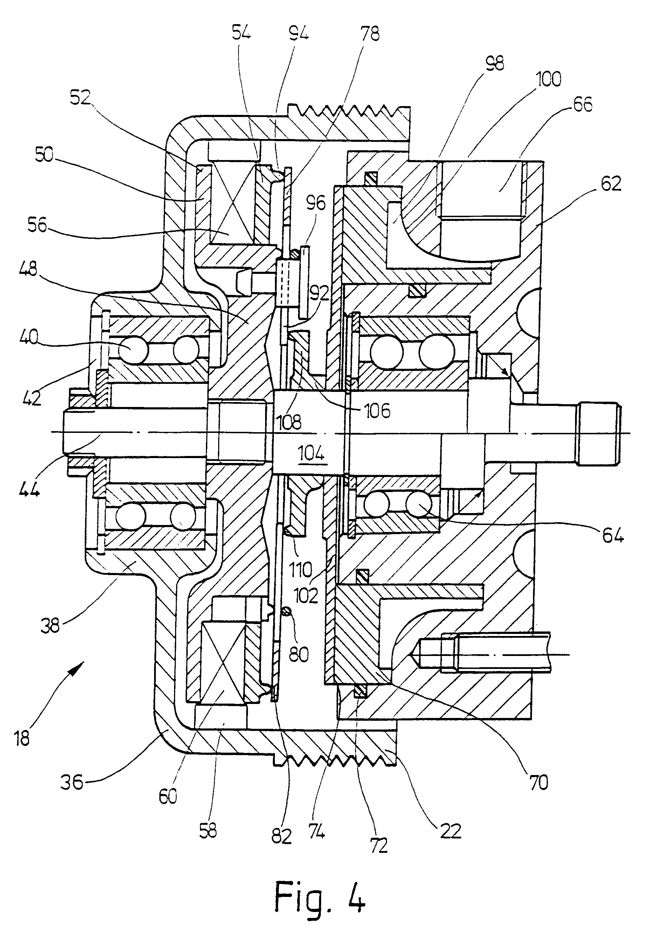

In der Figur 4 ist die Kupplung 18 in einer weiteren Ausführungsvariante gezeigt. Gleiche Teile wie in den Figuren 2 und 3 sind wiederum mit gleichen Bezugszeichen versehen und nicht nochmals erläutert. Der Kanal 66 mündet hier in einen Ringraum 98, der eine geschwungene Wandung 100 aufweist, die ein günstiges Anströmen des Öls an den Hydraulikzylinder 70 ermöglicht. Der Hydraulikzylinder 70 weist an seiner Seite 74 eine Scheibe 102 auf, die auf einer Hülse 104 geführt ist. Zu der Scheibe 102 benachbart ist auf der Hülse 104 ein Ring 106 angeordnet, der einen Kragarm 108 aufweist. Der Kragarm 108 besitzt einen nasenartigen Vorsprung 110, der an dem Ende 92 der Tellerfeder 78 anliegt. Die Wirkungsweise der in Figur 4 gezeigten Anordnung ist die gleiche wie die bereits zu den Figuren 2 und 3 erläuterte. Durch Verschieben des Hydraulikzylinders 70 wird die Scheibe 102 und damit der Ring 106 in axialer Richtung verschoben, so daß der Vorsprung 110 gegen das Ende 92 der Tellerfeder 78 drückt und diese damit um die Führung 80 verschwenkt wird.

Die in den Figuren 2 bis 4 gezeigten Anordnungen einer hydraulischen Kupplung sind lediglich beispielhaft. So kann jeder beliebige weitere Kupplungsaufbau gewählt werden, wenn dadurch durch das Verschieben wenigstens eines Hydraulikzylinders ein mit der Antriebswelle einer Lenkhilfpumpe verbundenes Kupplungsteil ausgekuppelt werden kann.

## Patentansprüche

1. Abschaltbare Servolenkung mit einer über die Antriebsmaschine eines Kraftfahrzeugs antreibbaren Lenkhilfpumpe, **dadurch gekennzeichnet**, daß die Lenkhilfpumpe (20) eine hydraulische Kupplung (18) aufweist, die über einen Ölkreislauf, vorzugsweise einen Schmierölkreislauf (14) der Antriebsmaschine (10) betätigbar ist.

2. Abschaltbare Servolenkung nach Anspruch 1, **dadurch gekennzeichnet**, daß ein zur Kupplung (18) führender Zweig (16) des Schmierölkreislaufs (14) ein Magnetventil (24) enthält, das über eine mit einer Lenkung des Kraftfahrzeugs zusammenwirkenden Steuerschaltung (26) betätigbar ist.

3. Abschaltbare Servolenkung nach einem der vorhergehenden Ansprüche, **dadurch gekennzeichnet**, daß die Steuerschaltung (26) mit einem Sensor verbunden ist, der bei einer Betätigung der Lenkung des Kraftfahrzeugs die Steuerschaltung (26) aktiviert.

4. Abschaltbare Servolenkung nach Anspruch 3, **dadurch gekennzeichnet**, daß der Sensor ein Drehmomentsensor (34) ist, der in einem Lenkrad (32) angeordnet ist, der bei Überschreiten eines bestimmten Drehmomentes am Lenkrad (32) die Steuerschaltung (26) aktiviert.

5. Abschaltbare Servolenkung nach Anspruch 4, **dadurch gekennzeichnet**, daß das Drehmoment 1 bis 5 Nm, vorzugsweise etwa 3 Nm, beträgt.

6. Abschaltbare Servolenkung nach einem der vorhergehenden Ansprüche, **dadurch gekennzeichnet**, daß die Kupplung (18) wenigstens einen Hydraulikzylinder (70) aufweist, der über den Zweig (16) des Schmierölkreislaufs (14) mit einem Druck beaufschlagbar ist.

7. Abschaltbare Servolenkung nach einem der vorhergehenden Ansprüche, **dadurch gekennzeichnet**, daß zur Beaufschlagung des Hydraulikzylinders (70) ein von einer Mindestdrehzahl der Antriebsmaschine (10) und damit einer Schmierölpumpe (12) abhängiger Druck notwendig ist.

8. Abschaltbare Servolenkung nach einem der vorhergehenden Ansprüche, **dadurch gekennzeichnet**, daß die Mindestdrehzahl 500 bis 1500 U/min., vorzugsweise ca. 1000 U/min. beträgt.

9. Abschaltbare Servolenkung nach einen der vorhergehenden Ansprüche, **dadurch gekennzeichnet**, daß die Kupplung (18) ein über den Hydraulikzylinder (70) gegen die Kraft einer Feder (78) betätigbares Kupplungsteil (76, 88, 102, 106) aufweist und über die Feder (78) ein erstes Kupplungsteil (48) mit einem zweiten ständig rotierenden Kupplungsteil (36) in oder außer Eingriff bringbar ist.

10. Abschaltbare Servolenkung nach einem der vorhergehenden Ansprüche, **dadurch gekennzeichnet**, daß das erste Kupplungsteil (36) fest auf einer Welle (44) angeordnet ist, die einen Rotor (46) der Lenkhilfpumpe (20) trägt.

11. Abschaltbare Servolenkung nach einem der vorhergehenden Ansprüche, **dadurch gekennzeichnet**, daß bei einem in dem Zweig (16) auftretenden, beispielsweise durch einen Ausfall des Schmierölkreislaufs (14) bewirkten Druckabfall die Kupplung (18) durch die Kraft der Feder (78) einkuppelbar ist.

12. Abschaltbare Servolenkung nach einem der vorhergehenden Ansprüche, **dadurch gekennzeichnet**, daß bei einem Ausfall der Steuerschaltung (26) das Magnetventil (24) durch die Kraft einer Feder (29) in eine die Kupplung (18) mit einer beispielsweise zu einem Tank führenden Verbindung (30) verbindenden Stellung bringbar und damit die Kupplung (18) einkuppelbar ist.
